# EUROPEAN PATENT SPECIFICATION

(11) **EP 2 642 570 B1**
(45) Date of publication and mention of the grant of the patent: **16.12.2015**
(21) Application number: 12160897.0
(22) Date of filing: 23.03.2012
(51) Int. Cl.: H01M 8/02, H01M 8/12

(54) **A current collection apparatus and method of processing for a solid oxide fuel cell thereof**
Eine Stromkollektor-Vorrichtung und ein Verfahren zur Verarbeitung fur eine diese enthaltende Festoxid-Brennstoffzelle
Un appareil de collecte de courant et procédé de traitement d'une cellule à combustible à oxyde solide de tels éléments

(43) Date of publication of application: 25.09.2013
(73) Proprietor: Institute of Nuclear Energy Research Atomic Energy Council, Executive Yuan, Taoyuan County 32546 (TW)
(72) Inventor: Chang, Jen-Chen, 325 LONGTAN TOWNSHIP TAOYUAN COUNTY, TAIWAN (TW); Lee, Maw-Chwain, 325 LONGTAN TOWNSHIP TAOYUAN (TW); Yang, Rung-Je, 325 LONGTAN TOWNSHIP TAOYUAN COUNTY, (TW); Lin, Tai-Nan, LONGTAN TOWNSHIP TAOYUAN COUNTY, (TW); Chang, Yang-Chuang, 325 LONGTAN TOWNSHIP TAOYUAN COUNTY, (TW); Kao, Wei-Xin, 325 LONGTAN TOWNSHIP TAOYUAN COUNTY, (TW); Lee, Lin-Song, 325 LONGTAN TOWNSHIP TAOYUAN COUNTY, (TW)
(74) Representative: Lermer, Christoph

(56) References cited:
- EP-A1- 2 178 145
- WO-A1-03/041196
- WO-A2-02/47798
- WO-A2-2006/063163
- WO-A2-2008/033421
- WO-A2-2009/027977
- JP-A- 2009 037 872
- US-A1- 2011 311 902

## Description

### Background of the invention

### Field of the invention

This invention relates to a current collection apparatus and its method of processing for a solid oxide fuel cell, it specifically relates to a current collection apparatus and its processing method so that a direct connection can be made with the electrode to reduce the entire interface impedance and to enhance the electrical conductivity efficiency.

### Description of the related art

Today, the petroleum storage on earth is reduced gradually, along with the gradual attention of environmental protection and green house effect gas CO₂ topic, the development of more environmental protection energy storage and energy conversion technique thus becomes so important. Solid oxide fuel cell (SOFC) has high performance energy conversion efficiency, it is of no noise, of low environmental pollution, of high reliability, meanwhile, the fuel is diversified and the power can be generated continuously and stably, hence, it is a power generation apparatus that has the greatest potential.

Since all the components of a general solid oxide fuel cell are solids, hence, the cell design is diversified, currently, the commonly used design can be divided into tubular type and planar type, among them, the planar structure has lower manufacturing cost, simple process and easier-to-develop thin film electrolyte, hence, planar structure is more widely studied. In recent years, in order to enhance the power density of the solid oxide fuel cell, the goal is usually put on the reduction of the polarization loss and ohmic loss of the cell. Polarization loss is usually surmounted through new material development and the improvement of electrode structure, for example, due to the insufficient high temperature ionic electrical conductivity, LSM cathode is gradually replaced by LSCF, meanwhile, pore former is added in the electrode to enhance the diffusion rate of gas in the electrode; moreover, the reduction of the entire ohmic loss is improved through the improvement of thin film technology so as to reduce the electrolyte thickness. However, generally, the entire ohmic loss not only is related to the electrolyte thickness, but also is highly related to the contact resistance between electrode and current collection apparatus, and contact resistance is always seen as the key factor affecting the power density of the cell.

In a prior art, WO 02/47798, it disclosed silver paste grids were screen-printed on the top to ensure proper current collection, and both electrodes were provided with platinum wire current collectors. However, the screen-printed silver paste is used for connecting the metal wire with the electrode, it doesn't teach a way as to consolidate or integrate the metal wire to the electrode other than conventional method to press the metal wire to the electrode with a risk causing the electrode to crack.

In another prior art. WO 03/041196. it disclosed using silver paste to affix a silver wire for current collector. It doesn't teach a way to consolidate or integrate the silver wire to the electrode other than pressing the silver to the electrode with a risk causing the electrode to crack.

In a prior art, D8 WO 2009/027977, it disclosed on page 23, line 1-10, with reference to Figure 4, comprising a transparent conductor layer 404 screen printed on a surface of photo-anode support glass, including a current collecting wire 410 bonded with a ceramic adhesive layer 415. The cited reference doesn't teach the claimed limitation of the present invention, including fixing a metal conductive wire by applying the fixing layer on top of the second conductive adhesive layer pasted on the first conductive adhesive layer at a first crossing point of the first conductive adhesive layer and by applying the fixing layer on the metal conductive wire at a second crossing point of the first conductive adhesive layer.

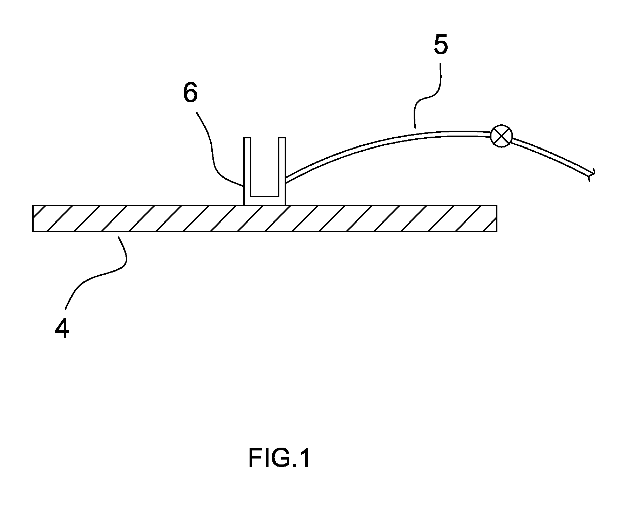

As shown in figure 1, it is the structure of typical and traditional current collection apparatus, and it has a current collection apparatus 6 that is in direct contact with the surface of the electrode 4 of the solid oxide fuel cell. In the actual application, in order to reduce the contact resistance between the current collection apparatus 6 and electrode 4, the cell piece, the most commonly seen method is to increase directly the contact pressure between current collection apparatus 6 and electrode 4 so that close contact can be formed between both of them, and contact resistance can then be effectively reduced, however, too much pressure might usually lead to the difficulty in cell piece to take the external pressure and the final breakage, hence, the entire cell stack must be replaced due to the damage of only few cell pieces.

Due to the above drawbacks of the prior art current collection apparatus and processing method of solid oxide fuel cell, the inventor has thus provided much of improvements as described in this invention.

### Summary of the invention

The main objective of this invention is to provide a current collection apparatus for solid oxide fuel cell, which uses screen printing to form a current collection layer on the electrode, moreover, the contact interface between the current collection layer and electrode is firmly adhesive via interface sintering, and it has relatively low contact resistance as compared to that of the traditional metal net current collector which has contact area of physical contact, hence, it can enhance effectively the current conduction efficiency.

Another objective of this invention is to provide a current collection apparatus and its method of processing for a solid oxide fuel cell, which uses screen printing method to prepare a current collection layer, and accompanied with the connection layer of conductive adhesive and the fixed wire of the fixing layer with ceramic adhesive, in addition to reducing the contact resistance between the electrode and current collector effectively, external force is totally avoided to be used for the reduction of contact resistance, and the chance of the damage of the cell piece is then reduced, finally, the manufacturing cost can be reduced.

To achieve the above objective and function in this invention, the technical methods adopted include: a current collection apparatus for a solid oxide fuel cell, which includes: a current collection layer formed by a first conductive adhesive screen-printed on the electrode surface of solid oxide fuel cell; a second conductive adhesive layer formed by a second conductive adhesive pasted on a metal conductive wire at a first crossing point on the first conductive adhesive layer; a fixing layer formed by the ceramic adhesive for fixing the metal conductive wire by applying the ceramic adhesive on top of the second conductive adhesive layer at the first crossing point on the first conductive adhesive layer; characterized in that the ceramic adhesive layer is being applied for fixing the conductive wire between the first conductive adhesive layer and the second conductive adhesive layer at the first crossing point of the first conductive adhesive layer and being applied for fixing the metal conductive wire on the first conductive adhesive layer at an adjacent second crossing point of the first conductive adhesive layer.

According to the above structure, the current collection layer covers roughly about 1∼50% the electrode area.

According to the above structure, the current collection layer has longitudinal and transverse interleaved net grid arrangement structure.

According to the above structure, the mesh size of the grid can be 150∼300 mesh.

According to the above structure, the line width of the grid can be 0.1mm∼5mm.

According to the above structure, the conductive adhesive covers each of the pasting area between metal conductive wire and current collection layer.

This invention further includes: A method of processing of a current collection apparatus of a solid oxide fuel cell, and includes: a step "to screen-print the designed shape first conductive adhesive onto electrodes surface"; a step "to dry and sinter the first conductive adhesive so as to form current collection layer onto electrode", and the current collection layer has longitudinally and transversely interleaved grid structure; a step "to use conductive adhesive to form a second conductive adhesive layer so as to paste a metal conductive wire onto the current collection layer at a first crossing point on the first conductive adhesive layer", and the conductive adhesive covers each of the pasting area between the metal conductive wire and the current collection layer; a step "to dry and sinter the conductive adhesive"; a step "to use ceramic adhesive to form a fixing layer so as to paste the conductive wire, the second adhesive layer and the first adhesive layer, and fix the metal conductive wire on the electrode at the first crossing point on the first conductive adhesive layer"; a step "to dry and sinter the fixing layer", characterized in that the ceramic adhesive layer is being applied for fixing the conductive wire between the first conductive adhesive layer and the second conductive adhesive layer at the first crossing point of the first conductive adhesive layer and being applied for fixing the metal conductive wire on the first conductive adhesive layer at an adjacent second crossing point of the first conductive adhesive layer.

According to the above method, the conductive adhesive screen-printed onto the electrode surface is dried through 60-200°C baking for one hour.

According to the above method, after the drying of the conductive adhesive screen-printed onto the electrode surface, it is then baked for another hour at 500-1000°C so that conductive adhesive can be sintered into current collection layer.

According to the above method, the conductive adhesive is baked at 60-200□ for one hour for drying.

According to the above method, after the drying of the conductive adhesive, it is then baked for one more hour at 500-1000°C so as to sinter the conductive adhesive.

According to the above method, the fixing layer is placed for 16 hours at room temperature so that the ceramic adhesive can form the bonding mildly.

According to the above method, the fixing layer is baked at 60-100°C.

According to the above method, the dried fixing layer is baked for one hour at 150∼200°C so that the ceramic adhesive can sinter.

For the detailed structure, application principle, function and effectiveness of this invention, you can refer to the descriptions accompanying the attached drawings to get the full understanding:

### Brief descriptions of the drawings

Figure 1 is side view cross sectional structure drawing of a conventional current collection apparatus.
Figure 2 is the entire processing flow chart of this invention.
Figure 3A is the cross sectional structure drawing of current collection apparatus of this invention.
Figure 3B is the top view planar structure drawing of current collection apparatus of this invention.
Figure 4 is the SEM cross section structure drawing of current collection layer of this invention.
Figure 5A is the side view cross sectional structural drawing of experimental reference apparatus that has the metal conductive wire fixed merely by ceramic adhesive.
Figure 5B is the top view planar structure drawing of the current collection apparatus of figure 5A.
Figure 6A is the current power density comparison chart between this invention and each experiment reference apparatus at 700°C .
Figure 6B is the current power density comparison chart between this invention and each experiment reference apparatus at 750°C .
Figure 6C is the current power density comparison chart between this invention and each experiment reference apparatus at 800°C .
Figure 7 is the AC impedance analysis comparison chart between this invention and each experiment reference apparatus.

### Detailed description of the preferred embodiment

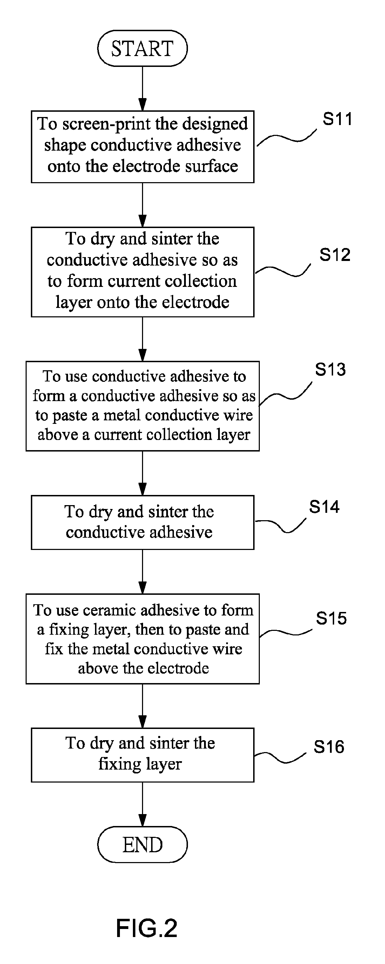

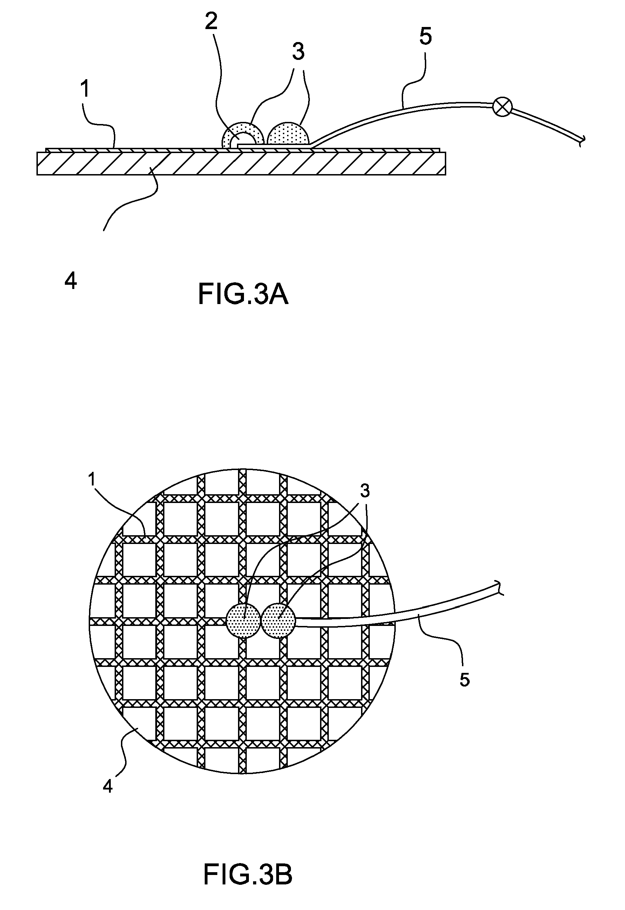

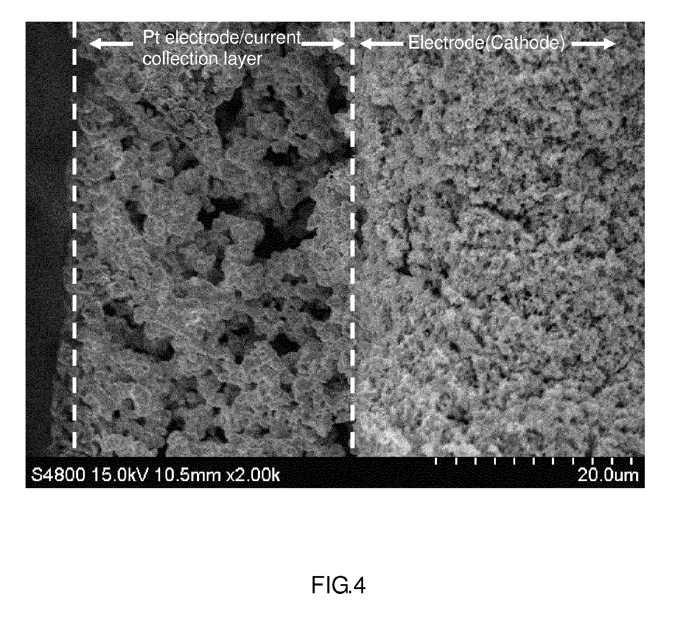

Please refer to figure 2, 3A, 3B and 4, and it is clear that the entire processing flows of this invention mainly include: a S11 step "to screen-print the designed shape conductive adhesive onto the electrode surface", a S12 step "to dry and sinter the conductive adhesive so as to form current collection layer onto the electrode", a S13 step "to use conductive adhesive to form a conductive adhesive so as to paste a metal conductive wire above a current collection layer", a S14 step "to dry and sinter the conductive adhesive", a S15 step "to use ceramic adhesive to form a fixing layer, then to paste and fix the metal conductive wire above the electrode", a S16 step "to dry and sinter the fixing layer"; wherein the S11 step "to screen-print designed shape conductive adhesive onto the electrode surface" is to use screen printing technology to screen-print the needed conductive adhesive pattern onto the surface of electrode 4 (cell piece) of solid oxide fuel cell, and the conductive adhesive pattern can be longitudinally and transversely interleaved grid arrange structure (as shown in figure 3B), wherein the mesh size of the grid can be 150∼300mesh, and the line width scope of the grid can be 0.1mm∼5mm; through the S12 step "to dry and sinter the conductive adhesive so as to form current collection layer onto the electrode", use temperature of 80∼200°C to remove the solvent in the conductive adhesive, then use the temperature of 600∼1000 °C to perform several hours of sintering of conductive adhesive so that the screen-printed conductive adhesive can form a current collection layer 1 (as shown in figure 3A) on electrode 4, meanwhile, the current collection layer 1 covers about 1∼50% the area of electrode 4, after this stage is finished, based on your need, you can use SEM microstructure analysis (as shown in figure 4) to confirm good interface bonding of electrode/current collection layer; then through S13 step "to use conductive adhesive to form a conductive adhesive, then paste a metal conductive wire onto the current collection layer", then a metal conductive wire 5 is pasted to current collection layer 1, then conductive adhesive is used to paste the metal conductive wire 5 and current collection layer 1, then through S 14 step "to dry and sinter the conductive adhesive", then temperature of 80∼200°C is used to remove the solvent within the conductive layer to paste the metal conductive wire 5 onto current collection layer 1, then temperature of 600∼1000 °C is used to perform several hours of conductive adhesive sintering so as to form an adhesive layer 2; finally, the S15 step "to use ceramic adhesive to form a fixing layer, then to paste and fix the metal conductive wire onto the electrode" is implemented, then step S16 "to dry and sinter the fixing layer" is implemented, that is, ceramic adhesive is used to paste the metal conductive wire 5 onto electrode 4, meanwhile, it is placed at room temperature for 16-20 hours so that ceramic adhesive can form the bonding mildly, then it is baked at temperature of 90°C so as to remove the extra water in the ceramic adhesive, in addition, in the temperature range of 150∼200°C, the ceramic adhesive is baked so as to enhance the strength of the ceramic adhesive and to form a fixing layer 3.

Please refer to figure 3A to 7, and in the following, we only use an embodiment to explain the above processing method:
1. The adopted cell unit can be planar solid oxide fuel cell unit formed by NiO-YSZ//YSZ//LSM, and the support layer is round piece of diameter of three centimeters formed by tape casting process with entire thickness of 600∼1000µm.
2. Use spray gun or polished method to clean the surface of the electrode 4 (cell piece) of the cell unit, then screen printing technology is used to screen-pint the pattern of conductive adhesive (which can be Pt paste) to the surface of the electrode 4 of the cell unit, and the conductive adhesive pattern has longitudinally and transversely interleaved grid arrangement structure, and the mesh size of the grid can be 250 mesh, and the line width scope of the grid can be 1mm.
3. Put the screen-printed electrode 4 (cell piece) into the oven, then use 80°C to dry for one hour, then use temperature of 900°C to bake the electrode 4 (cell piece) for one hour so that conductive adhesive (Pt paste) will be sintered into a current collection layer 1.
4. Then, based on the need, SEM can be used to analyze the microstructure of the interface pasting between electrode and current collection layer, then whether the interface between electrode and current collection layer is good or not is confirmed, and whether the pasting of the interface between current collection layer 1 and the interface of LSM electrode 4 is also confirmed.
5. Paste a (platinum) metal conductive wire 5 onto the current collection layer 1, then cover the conductive adhesive (Pt adhesive) on each of the pasting area between metal conductive wire 5 and current collection layer 1; then 80°C is used again to dry for one hour, and 900°C is used additionally to bake for one hour so that conductive adhesive (Pt paste) will be sintered to form a conductive adhesive 2.
6. Then the ceramic adhesive (Al₂O₃) is used to fix the metal conductive wire 5 onto electrode 4, next, electrode 4 is placed at room temperature for 16 hours so that mild bonding can be formed in ceramic adhesive, then temperature of 90°C is used to bake and to remove water, then 150∼200°C is used to bake for one hour to enhance the strength of the ceramic adhesive and to form a fixing layer 3.

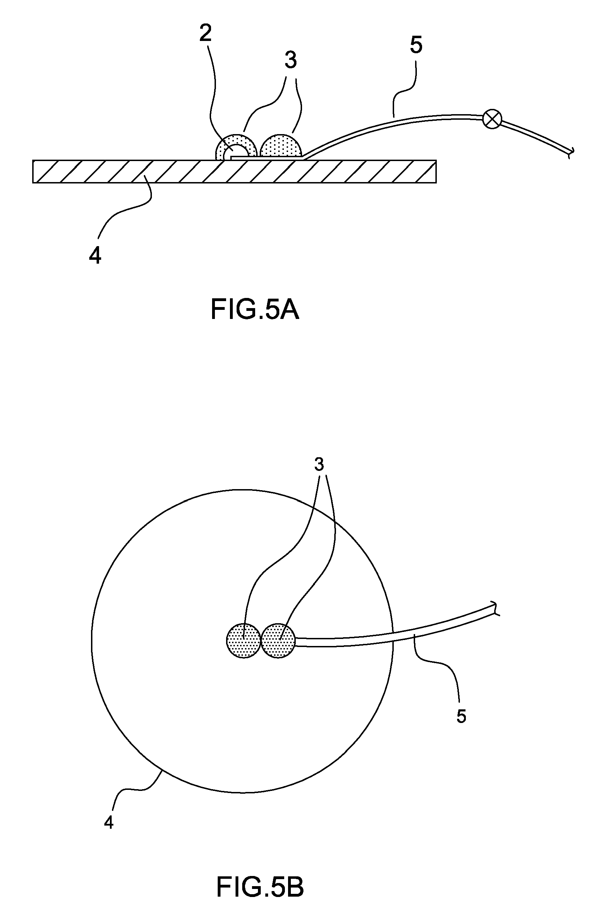

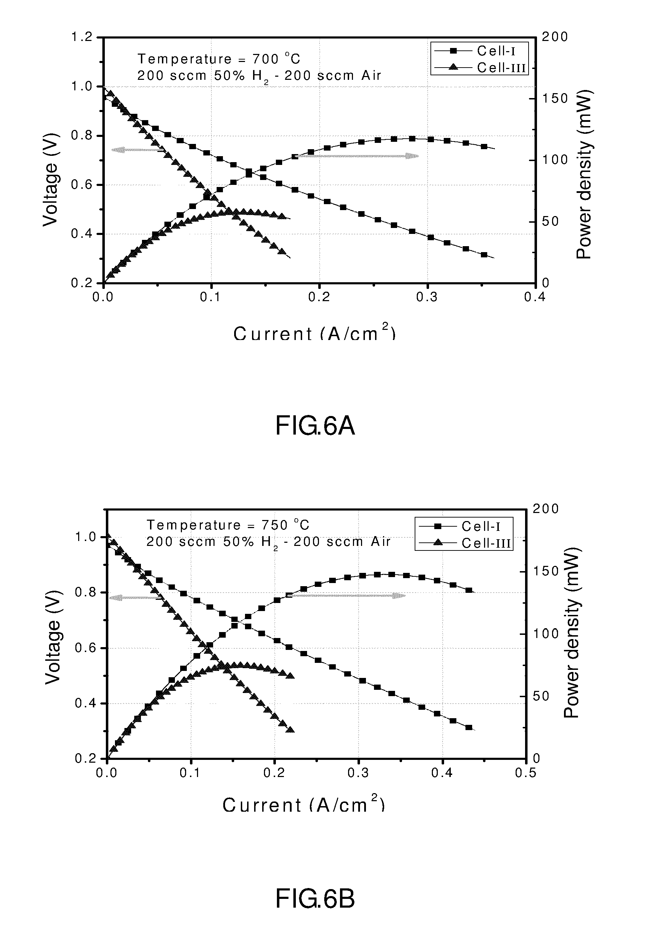

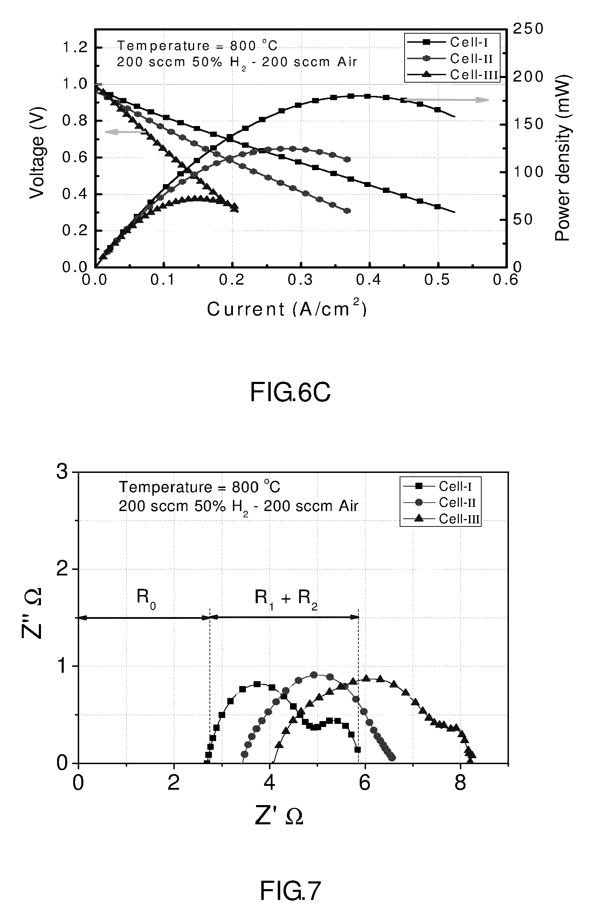

In order to facilitate the comparison of the real product embodied through the above embodiment of this invention to other related or traditional similar structure to see if this invention has better electrical test results, here an experiment reference structure is designed (as shown in figure 5A, 5B), and here only conductive adhesive 2 is used to paste a metal conductive wire 5 onto electrode 4, meanwhile, fixing layer 3 (ceramic adhesive) is used to fix the current collection apparatus of the metal conductive wire 5 (which does not have current collection layer 1as shown in figure 3); then the cell structure of this experiment reference structure (labeled as CELL II), this invention structure (labeled as CELL I) and the traditional current collection apparatus as shown in figure 1 (labeled as CELL III) is placed respectively into the experiment apparatus, then the temperature is raised in the rate of 1°C /min to 800°C, the H2 and air are sent to the anode and cathode respectively, wait for the reduction of the anode, then test the electrical characteristic of each cell respectively; figure 6A, 6B, 6C shows respectively current power density data when the temperature is respectively 700°C, 750°C and 800°C, and figure 7 is the AC impedance analysis data when the temperature is 800°C.

According to the above test result, it is obvious that the electrical test characteristic of this invention structure (CELL I) is obviously better than those of the experiment reference structure (CELL II) and traditional current collection apparatus (CELL III); hence, the above current collection apparatus of this invention can maintain good and continuous pasting and fixing between metal conductive wire 5/current collection layer 1 so as to effectively avoid the influence of the interface by the external force or the thermal stress; meanwhile, it can avoid the teasing-off of the metal conductive wire 5 during the packaging and testing process, it can also take long time high temperature test of the cell, it can effectively reduce the entire resistance of the cell, and it can also enhance the electron transfer flux in the electrode; in addition, after ceramic adhesive is passed through high temperature sintering, the microstructure is of high porosity, hence, for the area that is covered by the ceramic adhesive, the diffusion rate of the gas fuel in the electrode will not be affected.

Furthermore, the above structure of this invention, during the actual application, can be applicable to tubular type or planar type SOFC anode support cell (ASC-type), electrolyte support cell (ESC-type) or cathode support cell (CSC-type), or it can even be Metal support cell (MSC-type); and the metal for the conductive adhesive can be Ag, Cu, Au or noble metal of Pd, or even it can be the co-use of two or more metals, and the metal oxide in the ceramic adhesive might be SiO₂, ZrO₂ and Al₂O₃.

From the above statement, the current collection apparatus and processing method of solid oxide fuel cell of this invention indeed can form good, robust and direct connection with the electrode, and it can also reduce the interface impedance of the electrode output current, hence, it has industrial utility, creativity and progressiveness.

However, what stated above is only one of the better embodiments of this invention, and any equivalent change and modification made according to scope of this invention should be covered by what is claimed in this invention.

## Claims

1. A current collection apparatus for a solid oxide fuel cell for reducing contact resistance between a metal conductive wire (5) and an electrode (4) of the solid oxide fuel cell with a first conductive adhesive layer (1) screen-printed on the surface of the electrode (4), comprising:
a current collection layer formed by a first conductive adhesive (1) screen-printed on the electrode (4) surface of solid oxide fuel cell;
a second conductive adhesive layer (2) formed by a second conductive adhesive pasted on a metal conductive wire at a first crossing point on the first conductive adhesive layer (1);
a fixing layer formed by the ceramic adhesive (3) for fixing the metal conductive wire (5) by applying the ceramic adhesive on top of the second conductive adhesive layer (2) at the first crossing point on the first conductive adhesive layer (1);
**characterized in that**
the ceramic adhesive layer (3) is being applied for fixing the conductive wire (5) between the first conductive adhesive layer (1) and the second conductive adhesive layer (2) at the first crossing point of the first conductive adhesive layer (1) and being applied for fixing the metal conductive wire (5) on the first conductive adhesive layer (1) at an adjacent second crossing point of the first conductive adhesive layer (1).

2. The current collection apparatus for a solid oxide fuel cell of claim 1, wherein the current collection layer (1) covers ranging from 1% to 50% of the electrode surface.

3. The current collection apparatus for a solid oxide fuel cell of claim 1, wherein the current collection layer (1) has longitudinally and transversely interleaved grid arrangement structure.

4. The current collection apparatus for a solid oxide fuel cell of claim 3, wherein a mesh size of the grid is in a range from 150mesh to 300 mesh.

5. The current collection apparatus for a solid oxide fuel cell of claim 3, wherein the line width scope of the grid is in a range from 0.1mm to 5 mm.

6. The current collection apparatus for a solid oxide fuel cell of claim 1, wherein the second conductive adhesive layer (2) covers each of the pasting area between the metal conductive wire (5) and the current collection layer (1).

7. A method of processing of a current collection apparatus for a solid oxide fuel cell, which includes at least:
a step "to screen-print the designed shape first conductive adhesive onto electrodes surface";
a step "to dry and sinter the first conductive adhesive so as to form current collection layer onto electrode", and the current collection layer has longitudinally and transversely interleaved grid structure;
a step "to use conductive adhesive to form a second conductive adhesive layer so as to paste a metal conductive wire onto the current collection layer at a first crossing point on the first conductive adhesive layer (1)", and the conductive adhesive covers each of the pasting area between the metal conductive wire and the current collection layer;
a step "to dry and sinter the conductive adhesive";
a step "to use ceramic adhesive to form a fixing layer so as to paste the conductive wire, the second adhesive layer and the first adhesive layer, and fix the metal conductive wire on the electrode at the first crossing point on the first conductive adhesive layer (1)";
a step "to dry and sinter the fixing layer"
**characterized in that**
the ceramic adhesive layer (3) is being applied for fixing the conductive wire (5) between the first conductive adhesive layer (1) and the second conductive adhesive layer (2) at the first crossing point of the first conductive adhesive layer (1) and being applied for fixing the metal conductive wire (5) on the first conductive adhesive layer (1) at an adjacent second crossing point of the first conductive adhesive layer (1).

8. The method of processing of a current collection apparatus for a solid oxide fuel cell of claim 7, wherein the first conductive adhesive layer screen-printed onto the electrode surface is to be dried through baking in a range from 60 to 200°C for one hour.

9. The method of processing of a current collection apparatus for a solid oxide fuel cell of claim 8, wherein the first conductive adhesive layer screen-printed onto the electrode is dried first, then it is baked for one hour in a range from 500 to 1000 °C so as to sinter the conductive adhesive forming a current collection layer.

10. The method of processing of a current collection apparatus for a solid oxide fuel cell of claim 7, wherein the second conductive adhesive layer is baked for one hour in a range from 60 to 200°C for drying purpose.

11. The method of processing of a current collection apparatus for a solid oxide fuel cell of claim 10, wherein the second conductive adhesive layer is dried first, and then baked for one hour in a range from 500 to 1000 °C so as to sinter the conductive adhesive.

12. The method of processing of a current collection apparatus for a solid oxide fuel cell of claim 7, wherein the fixing layer is placed at room temperature for 16 hours so as to make mild bonding on the ceramic adhesive.

13. The method of processing of a current collection apparatus for a solid oxide fuel cell of claim 7, wherein the fixing layer is baked and dried in a range from 60 to 100 °C.

14. The method of processing of a current collection apparatus for a solid oxide fuel cell of claim 13, wherein the fixing layer after drying is baked in a range from 150 to 200 °C for one hour so as to sinter the ceramic adhesive.

## Patentansprüche

1. Apparat zum Sammeln von Strom für eine Festoxid-Brennstoffzelle zur Reduzierung des Kontaktwiderstands zwischen einer metallischen leitfähigen Leitung (5) und einer Elektrode (4) der Festoxid-Brennstoffzelle mit einer ersten leitfähigen Haftschicht (1), die auf die Oberfläche der Elektrode (4) mittels Siebdruck aufgebracht ist, umfassend:
Eine Schicht zum Sammeln von Strom, die durch eine erste leitfähige Haftschicht (1) gebildet wird, die mittels Siebdruck auf die Oberfläche der Elektrode (4) der Festoxid-Brennstoffzelle aufgebracht ist;
Eine zweite leitfähige Haftschicht (2), die durch eine zweite leitfähige Klebemasse gebildet wird, die an die metallische leitfähige Leitung an einem ersten Kreuzungspunkt auf der ersten leitfähigen Haftschicht (1) angeklebt ist;
Eine Befestigungsschicht, die durch die keramische Klebemasse (3) zur Fixierung der metallischen leitfähigen Leitung (5) durch Anwendung der keramischen Klebemasse auf der zweiten leitfähigen Haftschicht (2) am ersten Kreuzungspunkt auf der ersten leitfähigen Haftschicht (1) gebildet ist;
**dadurch gekennzeichnet, dass**
die keramische Haftschicht (3) angewendet wird, um die leitfähige Leitung (5) zwischen der ersten leitfähigen Haftschicht (1) und der zweiten leitfähigen Haftschicht (2) am ersten Kreuzungspunkt der ersten leitfähigen Haftschicht (1) zu fixieren und sie wird angewendet, um die metallische leitfähige Leitung an der ersten leitfähigen Haftschicht (1) an einem benachbarten zweiten Kreuzungspunkt der ersten leitfähigen Haftschicht (1) zu fixieren.

2. Apparat zum Sammeln von Strom für eine Festoxid-Brennstoffzelle nach Anspruch 1, wobei die Schicht (1) zum Sammeln von Strom die Oberfläche der Elektrode in einem Bereich von 1 % bis 50 % bedeckt.

3. Apparat zum Sammeln von Strom für eine Festoxid-Brennstoffzelle nach Anspruch 1, wobei die Schicht zum Sammeln von Strom (1) eine longitudinal und transversal verschachtelte Gitteranordnungsstruktur aufweist.

4. Apparat zum Sammeln von Strom für eine Festoxid-Brennstoffzelle nach Anspruch 3, wobei eine Maschenweite des Gitters in einem Bereich von 150 mesh bis 300 mesh liegt.

5. Apparat zum Sammeln von Strom für eine Festoxid-Brennstoffzelle nach Anspruch 3, wobei der Umfang der Linienbreite des Gitters in einem Bereich von 0.1 mm bis 5 mm liegt.

6. Apparat zum Sammeln von Strom für eine Festoxid-Brennstoffzelle nach Anspruch 1, wobei die zweite leitfähige Haftschicht (2) sowohl den Klebebereich zwischen der metallischen leitfähigen Leitung (5) als auch die Schicht (1) zum Sammeln von Strom bedeckt.

7. Verfahren zur Bearbeitung eines Apparats zum Sammeln von Strom für eine Festoxid-Brennstoffzelle, das wenigstens Folgendes umfasst:
einen Schritt des Siebdrucks der entwickelten Form der ersten leitfähigen Klebemasse auf die Elektrodenoberfläche;
einen Schritt des Trocknens und Sinterns der ersten leitfähigen Klebemasse, um eine Schicht zum Sammeln von Strom auf der Elektrode auszubilden, und wobei die Schicht zum Sammeln von Strom eine longitudinal und transversal verschachtelte Gitterstruktur aufweist;
einen Schritt der Verwendung der leitfähigen Klebemasse, um eine zweite leitfähige Haftschicht auszubilden, um eine metallische leitfähige Leitung auf die Schicht zum Sammeln von Strom an einem ersten Kreuzungspunkt auf der ersten leitfähigen Haftschicht (1) zu kleben, und wobei die leitfähige Klebemasse sowohl den Klebebereich zwischen der metallischen leitfähigen Leitung als auch die Schicht zum Sammeln von Strom bedeckt;
einen Schritt des Trocknens und Sinterns der leitfähigen Klebemasse;
einen Schritt der Verwendung der keramischen Klebemasse, um eine Befestigungsschicht auszubilden, um die leitfähige Leitung, die zweite Haftschicht und die erste Haftschicht anzukleben, und Fixieren der metallischen leitfähigen Leitung auf der Elektrode am ersten Kreuzungspunkt auf der ersten leitfähigen Haftschicht (1);
einen Schritt des Trocknens und Sinterns der Befestigungsschicht,
**dadurch gekennzeichnet, dass**
die keramische Haftschicht (3) angewendet wird, um die leitfähige Leitung (5) zwischen der ersten leitfähigen Haftschicht (1) und der zweiten leitfähigen Haftschicht (2) am ersten Kreuzungspunkt der ersten leitfähigen Haftschicht (1) zu fixieren und sie wird angewendet, um die metallische leitfähige Leitung an der ersten leitfähigen Haftschicht (1) an einem benachbarten zweiten Kreuzungspunkt der ersten leitfähigen Haftschicht (1) zu fixieren.

8. Verfahren zur Bearbeitung eines Apparates zum Sammeln von Strom für eine Festoxid-Brennstoffzelle nach Anspruch 7, wobei die erste leitfähige Haftschicht mittels Siebdruck auf die Oberfläche der Elektrode aufgebracht wird und durch Backen in einem Bereich von 60 bis 200 °C für eine Stunde getrocknet wird.

9. Verfahren zur Bearbeitung eines Apparates zum Sammeln von Strom für eine Festoxid-Brennstoffzelle nach Anspruch 8, wobei die erste leitfähige Haftschicht, die mittels Siebdruck auf der Elektrode aufgebracht ist, zuerst getrocknet wird, dann für eine Stunde in einem Bereich von 500 bis 1.000 °C gebacken wird, um die leitfähige Klebemasse zu sintern, um eine Schicht zum Sammeln von Strom auszubilden.

10. Verfahren zur Bearbeitung eines Apparates zum Sammeln von Strom für eine Festoxid-Brennstoffzelle nach Anspruch 7, wobei die zweite leitfähige Haftschicht für eine Stunde in einem Bereich von 60 bis 200 °C zum Zweck des Trocknens gebacken wird.

11. Verfahren zur Bearbeitung eines Apparates zum Sammeln von Strom für eine Festoxid-Brennstoffzelle nach Anspruch 10, wobei die zweite leitfähige Haftschicht zuerst getrocknet wird, und dann für eine Stunde in einem Bereich von 500 bis 1000 °C gebacken wird, um die leitfähige Klebemasse zu sintern.

12. Verfahren zur Bearbeitung eines Apparates zum Sammeln von Strom für eine Festoxid-Brennstoffzelle nach Anspruch 7, wobei die Befestigungsschicht bei Raumtemperatur für 16 Stunden gelagert wird, um ein sanftes Verbinden auf der keramischen Klebemasse durchzuführen.

13. Verfahren zur Bearbeitung eines Apparates zum Sammeln von Strom für eine Festoxid-Brennstoffzelle nach Anspruch 7, wobei die Befestigungsschicht gebacken und in einem Bereich von 60 bis 100 °C getrocknet wird.

14. Verfahren zur Bearbeitung eines Apparates zum Sammeln von Strom für eine Festoxid-Brennstoffzelle nach Anspruch 13, wobei die Befestigungsschicht nach dem Trocknen in einem Bereich von 150 bis 200 °C für eine Stunde gebacken wird, um die keramische Klebemasse zu sintern.

## Revendications

1. Appareil de collecte de courant pour une pile à combustible à oxyde solide pour réduire la résistance de contact entre un fil conducteur en métal (5) et une électrode (4) de la pile à combustible à oxyde solide avec une première couche adhésive conductrice (1) sérigraphiée sur la surface de l'électrode (4) comprenant:
une couche de collecte de courant formée par un premier adhésif conducteur (1) sérigraphié sur la surface de l'électrode (4) de la pile à combustible à oxyde solide ;
une seconde couche adhésive conductrice (2) formée par un second adhésif conducteur collé sur un fil conducteur en métal à un premier point de croisement sur la première couche adhésive conductrice (1),
une couche de fixation formée par l'adhésif céramique (3) pour fixer le fil conducteur en métal (5) en appliquant l'adhésif céramique sur le dessus de la seconde couche adhésive conductrice (2) au premier point de croisement sur la première couche adhésive conductrice (1),
**caractérisé en ce que**
a couche adhésive céramique (3) est appliquée pour fixer le fil conducteur (5) entre la première couche adhésive conductrice (1) et la seconde couche adhésive conductrice (2) au premier point de croisement sur la première couche adhésive conductrice (1) et est appliquée pour fixer le fil conducteur en métal (5) sur la première couche adhésive conductrice (1) à un second point de croisement adjacent de la première couche adhésive conductrice (1).

2. Appareil de collecte de courant pour une pile à combustible à oxyde solide selon la revendication 1, la couche de collecte de courant (1) couvrant de 1% à 50% de la surface de l'électrode.

3. Appareil de collecte de courant pour une pile à combustible à oxyde solide selon la revendication 1, la couche de collecte de courant (1) ayant une structure d'agencement en grille entrelacée longitudinalement et transversalement.

4. Appareil de collecte de courant pour une pile à combustible à oxyde solide selon la revendication 3, une taille du maillage de la grille étant de l'ordre de 150 mesh à 300 mesh.

5. Appareil de collecte de courant pour une pile à combustible à oxyde solide selon la revendication 3, la portée de la largeur de ligne de la grille étant de l'ordre de 0,1 mm à 5 mm.

6. Appareil de collecte de courant pour une pile à combustible à oxyde solide selon la revendication 1, la seconde couche adhésive conductrice (2) couvrant chacune des zones de collage entre le fil conducteur en métal (5) et la couche de collecte de courant (1).

7. Procédé de traitement d'un appareil de collecte de courant pour une pile à combustible à oxyde solide qui comprend au moins : une étape "pour sérigraphier la forme dessinée du premier adhésif conducteur sur la surface de l'électrode" ;
une étape "pour sécher et fritter le premier adhésif conducteur de manière à former une couche de collecte de courant sur l'électrode" et la couche de collecte de courant a une structure d'agencement en grille entrelacée longitudinalement et transversalement ;
une étape "pour utiliser un adhésif conducteur pour former une seconde couche adhésive conductrice de manière à coller un fil conducteur en métal sur la couche de collecte de courant à un premier point de croisement sur la première couche adhésive conductrice (1)" et la couche adhésive conductrice couvre chacune des zones de collage entre le fil conducteur en métal et la couche de collecte de courant ;
une étape "pour sécher et fritter l'adhésif conducteur" ;
une étape pour "utiliser un adhésif céramique pour former une couche de fixation de manière à coller le fil conducteur, la seconde couche adhésive et la première couche adhésive et le fil conducteur en métal sur l'électrode au premier point de croisement sur la couche adhésive conductrice (1) ;
une étape "pour sécher et fritter la couche de fixation",
**caractérisé en ce que** la couche adhésive céramique (3) est appliquée pour fixer le fil conducteur (5) entre la première couche adhésive conductrice (1) et la seconde couche adhésive conductrice (2) au premier point de croisement sur la première couche adhésive conductrice (1) et est appliquée pour fixer le fil conducteur en métal (5) sur la première couche adhésive conductrice (1) à un second point de croisement adjacent de la première couche adhésive conductrice (1).

8. Procédé de traitement d'un appareil de collecte de courant pour une pile à combustible à oxyde solide selon la revendication 7 dans lequel la première couche adhésive conductrice sérigraphiée sur la surface de l'électrode doit être séchée par cuisson dans une plage de 60 à 200 °C pendant une heure.

9. Procédé de traitement d'un appareil de collecte de courant pour une pile à combustible à oxyde solide selon la revendication 8 dans lequel la première couche adhésive conductrice sérigraphiée sur la surface de l'électrode est tout d'abord séchée, puis elle est cuite pendant une heure dans une plage de 500 à 1000 °C de manière à fritter l'adhésif conducteur qui forme une couche de collecte de courant.

10. Procédé de traitement d'un appareil de collecte de courant pour une pile à combustible à oxyde solide selon la revendication 7 dans lequel la seconde couche adhésive conductrice est cuite pendant une heure dans une plage de 60 à 200 °C pour séchage.

11. Procédé de traitement d'un appareil de collecte de courant pour une pile à combustible à oxyde solide selon la revendication 10 dans lequel la seconde couche adhésive conductrice sérigraphiée est tout d'abord séchée et puis cuite pendant une heure dans une plage de 500 à 1000 °C de manière à fritter l'adhésif conducteur.

12. Procédé de traitement d'un appareil de collecte de courant pour une pile à combustible à oxyde solide selon la revendication 7 dans lequel la couche de fixation est placée à température ambiante pendant 16 heures de manière à faire un léger collage sur l'adhésif céramique.

13. Procédé de traitement d'un appareil de collecte de courant pour une pile à combustible à oxyde solide selon la revendication 7 dans lequel la couche de fixation est cuite et séchée dans une plage de 60 à 100 °C.

14. Procédé de traitement d'un appareil de collecte de courant pour une pile à combustible à oxyde solide selon la revendication 13 dans lequel la couche de fixation est cuite après séchage dans une plage de 150 à 200 °C pendant une heure de manière à fritter l'adhésif conducteur.
